# EUROPEAN PATENT APPLICATION

(11) **EP 2 701 378 A1**
(43) Date of publication of application: **26.02.2014**
(21) Application number: 12774187.4
(22) Date of filing: 07.02.2012
(51) Int. Cl.: H04N 5/225, H04N 5/232, H04N 7/14

(54) **TRANSMITTER DEVICE, TRANSMISSION METHOD AND RECORDING MEDIUM**

(30) Priority: 18.04.2011 JP 2011092286
(71) Applicant: NEC CASIO Mobile Communications, Ltd., Kawasaki-shi Kanagawa 211-8666 (JP)
(72) Inventor: SHIRASAWA, Satoshi, Kawasaki-shi Kanagawa 211-8666 (JP)
(74) Representative: Vossius & Partner
(86) International application number: PCT/JP2012/052704
(87) International publication number: WO 2012/144250

(57) **Abstract**

A transmission device includes first capturing means; second capturing means; extracting means that extracts a predetermined image from an image captured by the second capturing means; synthesizing means that synthesizes an image captured by the first capturing means with the predetermined image extracted by the extracting means to generate a synthesized image; and transmission means that transmits the synthesized image.

## Description

### TECHNICAL FIELD

The present invention relates to a transmission device, a transmission method, and a record medium, in particular, to a transmission device that transmits images, a transmission method, and a record medium.

### BACKGROUND ART

Patent Literature 1 describes a mobile terminal having a videophone function using a first capturing lens and a second capturing lens. The mobile terminal described in Patent Literature 1 can transmit an image, which contains both an image of a scene or an object that appears in front of the user and that is captured by the first capturing lens and an image of the user that is captured by the second capturing lens, to a mobile terminal of a communication partner.

### RELATED ART LITERATURE

### PATENT LITERATURE

Patent Literature 1: JP2001-169166A, Publication

### SUMMARY OF THE INVENTION

### PROBLEM TO BE SOLVED BY THE INVENTION

If user A of the mobile phone that is described by Patent Literature 1 instructs user B of a mobile terminal that is a communication partner how to operate device C by using the mobile terminal described in Patent Literature 1, user A needs to capture both himself or herself and the operation position of device while operating device C.

In this case, user A simultaneously functions as an object, a photographer, and an instructor. Thus, since a heavy burden is imposed on user A, either or both of operation and capturing of device C tend to become imperfect. As a result, it becomes difficult for user A to satisfactorily inform user B how to operate device C.

An object of the present invention is to provide transmission devices, transmission methods, and record mediums that can solve the foregoing problem.

### MEANS THAT SOLVE THE PROBLEM

A transmission device according to the present invention includes first capturing means; second capturing means; extracting means that extracts a predetermined image from an image captured by the second capturing means; synthesizing means that synthesizes an image captured by the first capturing means with the predetermined image extracted by the extracting means to generate a synthesized image; and transmission means that transmits the synthesized image.

A transmission method, according to the present invention, is a transmission method for a transmission device including first capturing means and second capturing means and includes: extracting a predetermined image from an image captured by the second capturing means; synthesizing an image captured by the first capturing means with the predetermined image extracted by the extracting means to generate a synthesized image; and transmitting the synthesized image.

A record medium according to the present invention is a record medium on which a program that causes a computer to operate as a device is stored, the device including first capturing means; second capturing means; extracting means that extracts a predetermined image from an image captured by the second capturing means; synthesizing means that synthesizes an image captured by the first capturing means with the predetermined image extracted by the extracting means; and transmission means that transmits the synthesized image.

### EFFECT OF THE INVENTION

According to the present invention, it is possible to simplify transmission of the way to operate a device.

### BRIEF DESCRIPTION OF DRAWINGS

Fig. 1 is a functional block diagram showing electronic device 1 as an example of a transmission device according to an embodiment of the present invention.
Fig. 2A is a plan view showing electronic device 1.
Fig. 2B is a plan view showing electronic device 1.
Fig. 3 is a flow chart describing an operation that extracts an image of a human hand.
Fig. 4 is a flow chart describing operations that generate and transmit a synthesized image.
Fig. 5 is a schematic diagram showing an example of a synthesized image that is output to transmission control section 17.
Fig. 6 is a schematic diagram showing electronic device 1 composed of capturing section 11, capturing section 12, extracting section 13, synthesizing section 14, and transmission control section 17.

### MODES THAT CARRY OUT THE INVENTION

Next, with reference to the accompanying drawings, an exemplary embodiment of the present invention will be described.

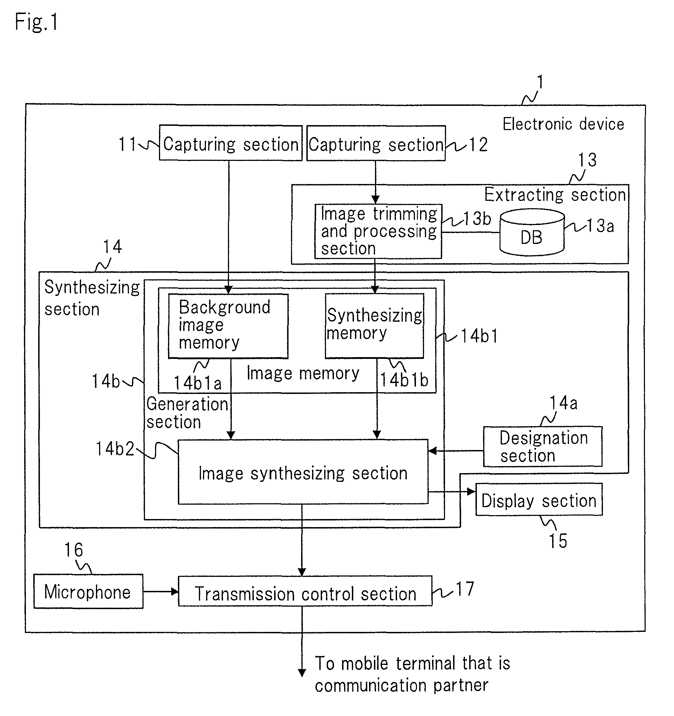

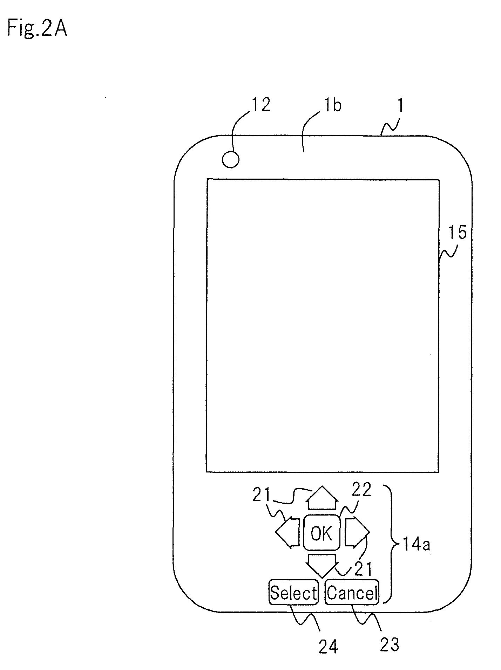

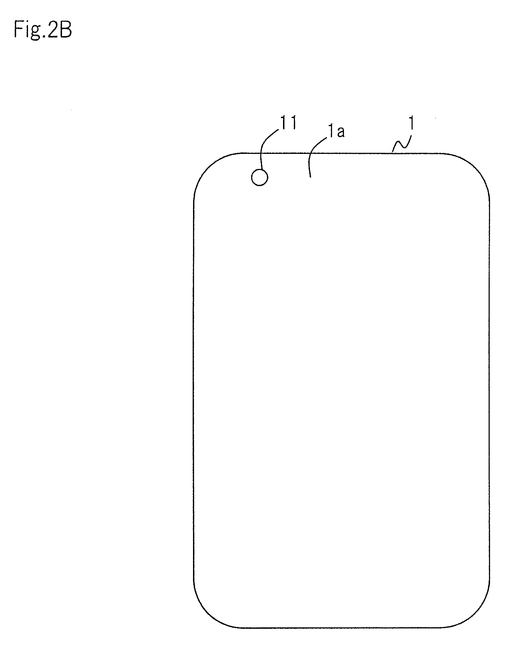

Fig. 1 is a functional block diagram showing electronic device 1 as an example of a transmission device according to an exemplary embodiment of the present invention. Fig. 2A is a front view showing electronic device 1. Fig. 2B is a rear view showing electronic device 1.

Electronic device 1 is, for example, a mobile phone or a smart phone. Electronic device 1 is not limited to a mobile phone or a smart phone, but may be for example a portable gaming machine, a tablet type PC (Personal Computer), or a note type PC.

Electronic device 1 includes capturing sections 11 and 12, extracting section 13, synthesizing section 14, display section 15, microphone 16, and transmission control section 17.

Capturing section 11 can be generally referred to as first capturing means.

Capturing section 11 is a camera and outputs a captured image. Hereinafter, a captured image that is output from capturing section 11 is referred to as "captured image A." As shown in Fig. 2B, capturing section 11 is located on rear surface 1a of electronic device 1.

Capturing section 12 can be generally referred to as second capturing means.

Capturing section 12 is a camera and outputs a captured image. Hereinafter, a captured image that is output from capturing section 12 is referred to as "captured image B." As shown in Fig. 2A, capturing section 12 is located on front surface 1b of electronic device 1.

Extracting section 13 can be generally referred to as extracting means.

Extracting section 13 extracts an image of a human hand (hereinafter simply referred to as "hand image") from captured image B (image captured by capturing section 12). The hand image can be generally referred to as predetermined image. The predetermined image is not limited to the hand image, but may be appropriately changed. Extracting section 13 includes pattern DB (Data Base) 13a and image trimming and processing section 13b.

Pattern DB 13a stores hand pattern vectors used to extract hand images.

Image trimming and processing section 13b employs an image recognizing technology that uses pattern vectors of hand images stored in pattern DB 13a in order to distinguish a human hand from captured image B and extract a hand image from captured image B.

Synthesizing section 14 can be generally referred to as synthesizing means.

Synthesizing section 14 synthesizes captured image A (image captured by capturing section 11) and the hand image extracted by image trimming and processing section 13b in order to generate a synthesized image. Synthesizing section 14 includes designation section 14a and generation section 14b.

Designation section 14a can be generally referred to as operation detection means.

Designation section 14a is, for example, a key pad composed of a plurality of key buttons. Designation section 14a detects a user's position designation operation that designates position PT of the hand image extracted by image trimming and processing section 13b in captured image A and detects a user's size designation operation that designates size SZ of the hand image extracted by image trimming and processing section 13b.

Designation section 14a has stored basic position information that represents default position DP of the hand image in captured image A and basic size information that represents default size DS of the hand image.

According to this exemplary embodiment, as shown in Fig. 2A, designation section 14a includes arrow keys 21, OK key 22, cancel key 23, and select key 24.

Arrow keys 21 detect a user's position designation operation that moves position PT of the hand image in captured image A in upper, lower, left, or right directions and a user's size designation operation that enlarges or reduces size SZ of the hand image in captured image A.

OK key 22 detects a user's confirmation operation that confirms a user's operation.

Cancel key 23 detects a user's cancelation operation that cancels a user's operation.

Select key 24 detects a user's selection operation that selects a move mode or an enlarge/reduce mode for arrow keys 21. According to this exemplary embodiment, arrow keys 21 default to the move mode.

If arrow keys 21 have been set for the move mode, the up arrow key operation becomes a position designation operation that moves position PT in the upper direction; the down arrow key operation becomes a position designation operation that moves position PT in the lower direction; the left arrow key operation becomes a position designation operation that moves position PT in the left direction; and the right arrow key operation becomes a position designation operation that moves position PT in the right direction.

If arrow keys 21 have been set for the enlarge/reduce mode, the up arrow key operation becomes a size designation operation that increases size SZ; and the down arrow key operation becomes a size designation operation that decreases size SZ.

Generation section 14b can be generally referred to as generation means.

Generation section 14b synthesizes the hand image extracted by image trimming and processing section 13b and captured image A at position PT designated by the position designation operation in captured image A in order to generate a synthesized image. In addition, generation section 14b sets the size of the hand image in the synthesized image for size SZ designated by the size designation operation. Generation section 14b includes image memory 14b1 and image synthesizing section 14b2.

Image memory 14b1 includes background image memory 14b1a and synthesizing memory 14b1b. Background image memory 14b1a stores captured image A. Synthesizing memory 14b1b stores the hand image extracted by image trimming and processing section 13b.

Image synthesizing section 14b2 superimposes the hand image that has size SZ and that is stored in synthesizing memory 14b1b on captured image A stored in background image memory 14b1a at position PT of captured image A so as to generate a synthesized image.

Display section 15 can be generally referred to as display means. Display section 15 displays the synthesized image synthesized by image synthesizing section 14b2.

Microphone 16 can be generally referred to as sound detection means. Microphone 16 detects sound and generates sound data corresponding to the sound.

Transmission control section 17 can be generally referred to as transmission means. Transmission control section 17 transmits sound data generated by microphone 16 together with the synthesized image synthesized by image synthesizing section 14b2 to a communication device (for example, a mobile terminal) that is a communication partner.

In the foregoing, the structure of this exemplary embodiment has been described. Since the circuit structure other than the videophone function of electronic device 1 is well-known to those skilled in the art, the description of the detailed structure is omitted in this specification.

Next, the operation will be described.

In the following description, it is assumed that the user of electronic device 1 captures an image of a device, whose operation procedures will be explained, with capturing section 11, and that the user captures his or her image with capturing section 12.

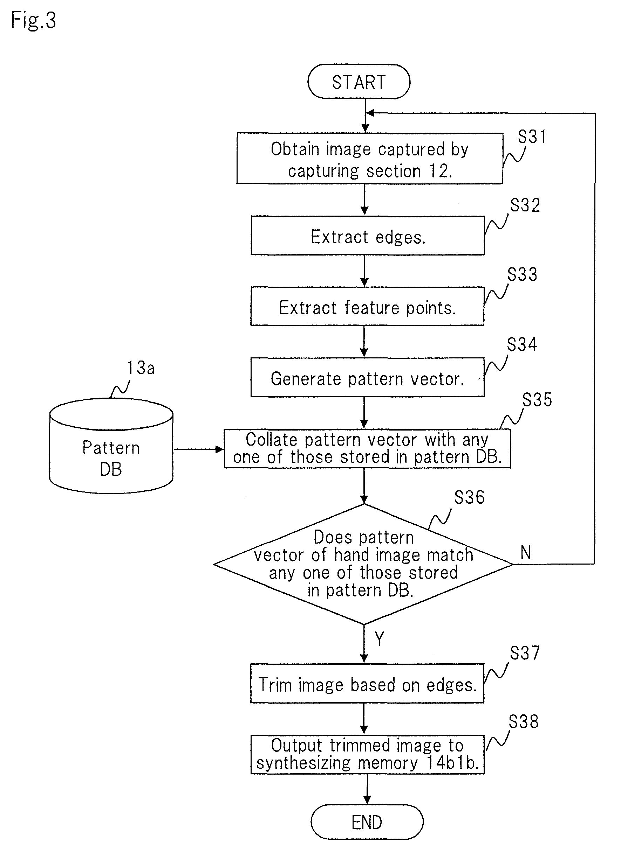

Fig. 3 is a flow chart describing an operation that extracts a hand image from captured image B that is output from capturing section 12.

When image trimming and processing section 13b obtains captured image B captured by capturing section 12 (at step S31), image trimming and processing section 13b extracts the edges of an object from captured image B (at step S32).

Thereafter, image trimming and processing section 13b extracts the feature points from an edge image specified by an image surrounded by the extracted edges (at step S33) and generates a pattern vector based on the feature points (at step S34).

Thereafter, image trimming and processing section 13b collates each of the pattern vectors of hand images stored in pattern DB 13a with the pattern vector generated at step S34 (at step S35).

If any of the pattern vectors of hand images stored in pattern DB 13a does not match the pattern vector generated at step S34 (at step S36), the flow in the process of image trimming and processing section 13b returns to step S31.

If any of a hand's pattern vectors stored in pattern DB 13a matches the pattern vector generated at step S34 (at step S36), image trimming and processing section 13b trims an image surrounded by the extracted edges, namely the hand image, from captured image B (at step S37) and outputs the trimmed hand image to synthesizing memory 14b1b (at step S38).

When image trimming and processing section 13b outputs the hand image to synthesizing memory 14b1b, the hand image extraction operation is complete.

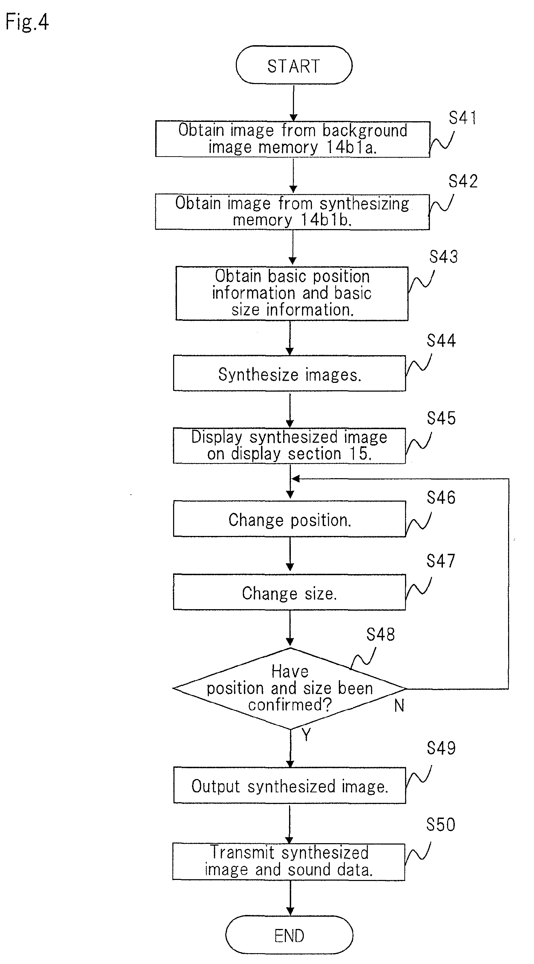

Fig. 4 is a flow chart describing operations that generate and transmit a synthesized image.

When background image memory 14b1a has stored captured image A that was output from capturing section 11 and synthesizing memory 14b1b has stored the hand image that was output from image trimming and processing section 13b, image synthesizing section 14b2 obtains captured image A from background image memory 14b1a (at step S41) and obtains the hand image from synthesizing memory 14b1b (at step S42).

Thereafter, image synthesizing section 14b2 obtains the basic position information and the basic size information from designation section 14a (at step S43).

Thereafter, image synthesizing section 14b2 superimposes the hand image that is stored in synthesizing memory 14b1b and that is enlarged/reduced in the size designated by the basic size information (default size DS) on captured image A at the position designated by the basic position information (default position DP) in order to generate a synthesized image (at step S44).

Thereafter, image synthesizing section 14b2 displays the synthesized image on display section 15 (at step S45).

If the user wants to change the position of the hand image in the synthesized image, while the user is watching the synthesized image displayed on display section 15, the user operates arrow keys 21. Image synthesizing section 14b2 moves the position of the hand image in the synthesized image up and down, left and right in accordance with an operation of arrow keys 21 and displays the moved hand image on display section 15 (at step 46). If arrow keys 21 are not operated, step S46 is skipped.

If the user wants to change the size of the hand image in the synthesized image, the user presses select key 24 so as to change the mode of arrow keys 21 from "move" to "enlarge/reduce." Thereafter, the user operates arrow keys 21.

When select key 24 is pressed, image synthesizing section 14b2 changes the mode of arrow keys 21 from "move" to "enlarge/reduce." In this situation, if arrow keys 21 is operated, image synthesizing section 14b2 changes the size of the hand image in the synthesized image in accordance with an operation of arrow keys 21 and displays the change result on display section 15 (at step S47). If select key 24 and arrow keys 21 are not operated, step S47 is skipped.

Step S46 and step S47 are repeated until OK key 22 is operated (at step S48).

Thereafter, if OK key 22 is operated, image synthesizing section 14b2 confirms the position and size of the hand image in the synthesized image as the position and size of the hand image that is displayed on display section 15 (at step S48) and outputs the synthesized image in which the position and size of the hand image have been confirmed to transmission control section 17 (at step S49).

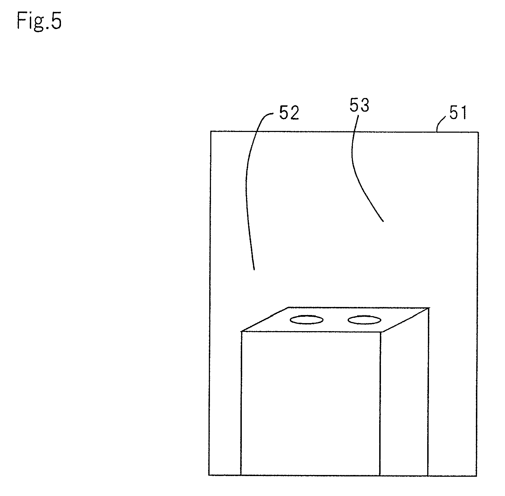

Fig. 5 is a schematic diagram showing an example of a synthesized image that is output to transmission control section 17.

In Fig. 5, synthesized image 51 is an image in which hand image 53 is synthesized with image 52 that is captured image A.

Transmission control section 17 synthesizes the synthesized image that is output from image synthesizing section 14b2 and sound data that is output from microphone 16 according to a videophone format and transmits the synthesized result to a communication device that is a communication partner (at step S50).

Next, an effect of this exemplary embodiment will be described.

According to this exemplary embodiment, extracting section 13 extracts a hand image from captured image B that is output from capturing section 12. Synthesizing section 14 synthesizes captured image A that is captured by capturing section 11 and the hand image that is extracted by extracting section 13 in order to generate a synthesized image. Transmission control section 17 transmits the synthesized image synthesized by synthesizing section 14.

Thus, when capturing section 11 captures an image of a device whose operation method will be explained and when capturing section 12 captures the user's image, the synthesized image, in which the hand image is synthesized with the image of the device that is captured by capturing section 11, is transmitted.

Thus, the user can transmit an image, which indicates an operation position and so forth of a device with the user's hand, to a communication partner without capturing the image that shows that the user is operating the device while the user is operating the device. In addition, it is possible to transmit an image, which shows an operation position and so forth of a device, whose image a user has difficulty capturing while the user is operating the device (for example, a self-propelled device) with the user's hand, to a communication partner.

Thus, since the user can easily obtain an image that indicates an operation position and so forth of a device with the user's hand, namely an image that describes how to operate a device, the burden imposed on the user can be reduced.

Since the burden imposed on the user is reduced, the user can accurately and specifically convey information about how to operate a device that is captured with electronic device 1.

If the accuracy of information about how to operate a device becomes high, the time duration, which is required for transmitting the way in which the device can be operated, can be shortened. As a result, the communication cost can be reduced.

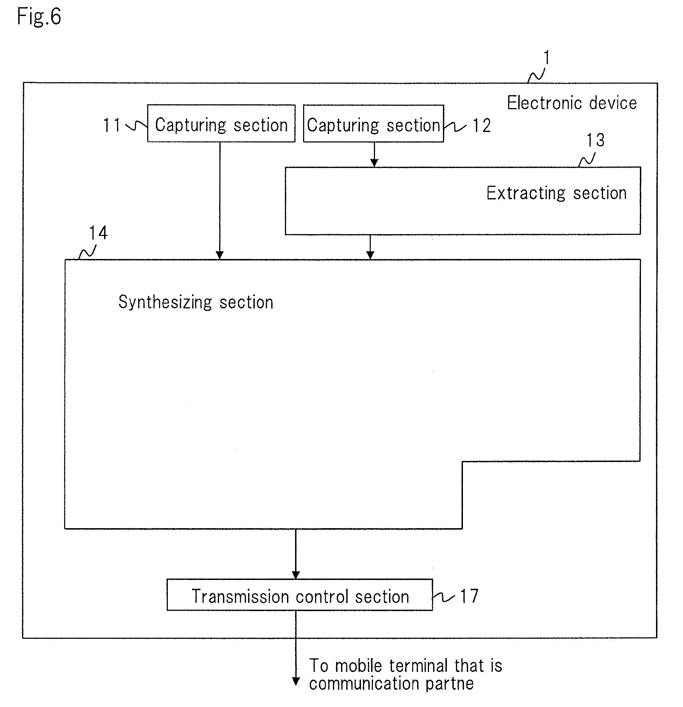

This effect can be accomplished by an electronic device composed of capturing section 11, capturing section 12, extracting section 13, synthesizing section 14, and transmission control section 17. Fig. 6 is a schematic diagram showing electronic device 1 composed of capturing section 11, capturing section 12, extracting section 13, synthesizing section 14, and transmission control section 17.

According to this exemplary embodiment, designation section 14a detects a position designation operation that designates the position of a hand image in captured image A. Generation section 14b synthesizes the hand image with captured image A at the position designated by the position designation operation in order to generate a synthesized image.

In this case, the user can set the position of the hand image in captured image A to any position.

In addition, according to this exemplary embodiment, designation section 14a detects a size designation operation that designates the size of the hand image in captured image A. Generation section 14b sets the size of the hand image in the synthesized image to the size designated by the size designation operation.

In this case, the user can set the size of the hand image in captured image A to any size.

According to this exemplary embodiment, display section 15 displays a synthesized image.

In this case, the user can confirm a synthesized image that is transmitted. In addition, while the user is confirming a synthesized image displayed on display section 15, the user can perform the position designation operation and size designation operation. As a result, it is possible to properly set the position and size of the hand image in captured image A.

In addition, according to this exemplary embodiment, microphone 16 detects sound. Transmission control section 17 transmits the sound that is output from microphone 16 along with the synthesized image.

In this case, the user can explain how to operate a device with the sound as well as the synthesized image.

In addition, according to this exemplary embodiment, the predetermined image is a hand image.

The shape of the hand can be changed in various way according to the preferences of each user. The hand is commonly used to instruct or describe something. Thus, if a hand image is used as the predetermined image, it is likely that a person who watches its synthesized image intuitively pays attention to an object (device) that is instructed by the hand image. As a result, it is possible to smoothly explain how to operate a device.

According to this exemplary embodiment, if the user who is a speaker wants to explain how to operate a particular unit over a videophone, it is possible to easily capture an image of the particular unit and to easily check and adjust the position designated by the hand image (for example, the operation position of the particular unit). As a result, it is possible to accurately and specifically inform the communication partner how to operate the particular unit. If the user designates the position of the hand image in the synthesized image, while the user is indicating the operation position of the particular unit with the user's right hand and is capturing an image of the particular unit with electronic device 1 that the user is holding with the user's left hand, the user operates designation section 14a with the user's left hand. It should be noted that user's right hand can be substituted for his or her left hand.

This exemplary embodiment may be modified as follows.

After the position of the hand image in captured image A is confirmed, the image trimming operation (extracting operation for the hand image) performed by image trimming and processing section 13b and the image synthesizing operation performed by image synthesizing section 14b2 may be successively performed. Image synthesizing section 14b2 may change the position of the hand image in captured image A as the position of the hand image extracted from captured image B changes. In this case, image trimming and processing section 13b outputs the position of the hand image extracted from captured image B to image synthesizing section 14b2.

According to this exemplary embodiment, captured image A that is output from capturing section 11 is used as a background image of the hand image. Alternatively, an image (received image) transmitted from a communication partner over a videophone may be used as a background image of the hand image. Further alternatively, a still image or a moving image stored in electronic device 1 may be used as a background image of the hand image.

In addition, the hand image may be appropriately changed. For example, if a predetermined key of designation section 14a is operated, for example, if OK key 22 and select key 24 are simultaneously operated, image trimming and processing section 13b may extract the hand image again in order to replace the former hand image stored in image memory 14b1 with the latest hand image.

In this case, the user can indicate the exact position and the exact direction with a hand image in which one finger is lifted up, and the user can indicate a particular range with an open hand image. Moreover, the user can indicate a boarder with a hand image in which the palm of the hand is lifted straight up. Thus, if the hand image is changed in such ways, it is possible to easily understand the instructions.

Although in the foregoing exemplary embodiment designation section 14a detects a user's operation with key buttons, designation section 14a may detect a use's operation with another input section such as a touch panel instead of key buttons. For example, if designation section 14a detects a user's operation with a touch panel, the touch panel is located on display section 15 and a designation section such as user's fingers may directly designate the position of the hand image in captured image A displayed on display section 15.

Electronic device 1 may be realized by a computer. In this case, the computer reads a program from a computer readable CD-ROM (Compact Disk read Only Memory) and operates as capturing sections 11 and 12, extracting section 13, synthesizing section 14, display section 15, microphone 16, and transmission control section 17. The record medium is not limited to the CD-ROM, but can be appropriately changed to another medium. Electronic device 1 may be realized by a computer connected to capturing sections 11 and 12. In this case, the computer reads a program from a record medium, executes the program, and operates as extracting section 13, synthesizing section 14, display section 15, microphone 16, and transmission control section 17.

The present invention has been described with reference to the exemplary embodiments. However, it should be understood by those skilled in the art that the structure and details of the present invention may be changed in various ways without departing from the scope of the present invention.

The present application claims priority based on Japanese Patent Application JP 2011-092286 filed on April 18, 2011, the entire contents of which being incorporated herein by reference in its entirety.

### DESCRIPTION OF REFERENCE NUMERALS

- 1: Electronic device
- 11, 12: Capturing section
- 13: Extracting section
- 13a: Pattern DB
- 13b: Image trimming and processing section
- 14: Synthesizing section
- 14a: Designation section
- 14b: Generation section
- 14b1: Image memory
- 14b1a: Background image memory
- 14b1b: Synthesizing memory
- 14b2: Image synthesizing section
- 15: Display section
- 16: Microphone
- 17: Transmission control section

## Claims

1. A transmission device, comprising:
first capturing means;
second capturing means;
extracting means that extracts a predetermined image from an image captured by said second capturing means;
synthesizing means that synthesizes an image captured by said first capturing means with the predetermined image extracted by said extracting means to generate a synthesized image; and
transmission means that transmits said synthesized image.

2. The transmission device according to claim 1,
wherein said synthesizing means includes:
operation detection means that detects a position designation operation that designates a position of said predetermined image in the image captured by said first capturing means; and
generation means that synthesizes the predetermined image extracted by said extracting means with the image captured by said first capturing means at the position designated by said position designation operation so as to generate said synthesized image.

3. The transmission device according to claim 2,
wherein said operation detection means further detects a size designation operation that designates a size of the predetermined image extracted by said extracting means, and
wherein said generation means sets the size of the predetermined image in said synthesized image to the size designated by said size designation operation.

4. The transmission device according to any one of claims 1 to 3, further comprising:
display means that displays said synthesized image.

5. The transmission device according to any one of claims 1 to 4, further comprising:
sound detection means that detects sound,
wherein said transmission means transmits a detection result of said sound detection means along with said synthesized image.

6. The transmission device according to any one of claims 1 to 5,
wherein said predetermined image is an image of a hand.

7. A transmission method for a transmission device including first capturing means and second capturing means, comprising;
extracting a predetermined image from an image captured by said second capturing means;
synthesizing an image captured by said first capturing means with the predetermined image extracted by said extracting means to generate a synthesized image; and
transmitting said synthesized image.

8. A program that causes a computer to operate as a device comprising:
first capturing means;
second capturing means;
extracting means that extracts a predetermined image from an image captured by said second capturing means;
synthesizing means that synthesizes an image captured by said first capturing means with the predetermined image extracted by said extracting means to generate a synthesized image; and
transmission means that transmits said synthesized image.
